# DEMANDE DE BREVET EUROPEEN

(11) **EP 4 573 972 A1**
(43) Date de publication de la demande: **25.06.2025**
(21) Numéro de dépôt: 24222135.6
(22) Date de dépôt: 20.12.2024
(51) Int. Cl.: A47C 23/00, A47C 23/043, A47C 27/06, B33Y 80/00, A42B 3/06, A47C 7/02

(54) **ÉLÉMENT DE MATELASSURE COMPORTANT UNE CHARNIÈRE POUR PERMETTRE UNE POSITION REPLIÉE DE L'ÉLÉMENT DE MATELASSURE**

(30) Priorité: 22.12.2023 FR 2315212
(71) Demandeur: Commissariat à l'Energie Atomique et aux Energies Alternatives, 75015 Paris (FR); Renault s.a.s, 92100 Boulogne Billancourt (FR)
(72) Inventeur: BONNEFOY, Vincent, 38054 Grenoble Cedex (FR); BRIN, Eric, 78280 GUYANCOURT (FR); GLEYZES, Hervé, 38054 Grenoble Cedex (FR); ROY, Jean-Baptiste, 78280 GUYANCOURT (FR)
(74) Mandataire: Ipsilon

(57) **Abrégé**

L'invention concerne un élément de matelas sure (10) monolithique architecturé en treillis comprenant un treillis de corps (1) et un treillis superficiel (11) recouvrant au moins partiellement le treillis de corps, l'élément de matelassure (10) comprenant un premier (32) et un deuxième (34) sous-éléments de matelassure reliés entre eux au niveau d'une charnière (36) reliant un premier et un deuxième treillis superficiels, ladite charnière (36) permettant un mouvement de rotation dudit premier sous-élément de matelassure (32) par rapport au deuxième sous-élément de matelassure (34) autour d'un axe longitudinal de charnière (A) entre une position dépliée et une position repliée.

## Description

### Domaine technique

La présente invention concerne le domaine des structures architecturées en treillis, notamment pour former des dispositifs comportant une interface souple, par exemple molletonnée. Ces structures architecturées en treillis peuvent être destinées à absorber un choc et/ou à former un appui corporel, tel qu'une assise d'un siège, un coussin, un matelas, un accoudoir, un appui-tête, un repose-poignet, une poignée de préhension ou un rembourrage de casque.

### Arrière-plan technologique

Il existe un type de structure architecturée en treillis comprenant un treillis de corps et un treillis superficiel solidaire de ce treillis de corps. Ce treillis superficiel forme une peau recouvrant au moins en partie le treillis de corps. Le treillis superficiel augmente la surface de contact de la structure architecturée en treillis sans influencer de manière conséquente les propriétés mécaniques en compression de cette dernière qui sont majoritairement déterminées par le treillis de corps. Cet agencement comprenant un treillis de corps et un treillis superficiel est particulièrement avantageux lorsque l'élément de matelassure est destiné à absorber un choc et/ou à former un appui corporel.

Dans le processus de fabrication additive, une pièce est réalisée par le dépôt successif de matière au sein d'une enceinte de fabrication additive. L'enceinte forme des limites physiques à la taille de la pièce à fabriquer. Les dimensions de cette enceinte contraignent ainsi les dimensions de la pièce à fabriquer rendant donc difficile la réalisation de pièces de grandes dimensions.

Une solution existante consiste à diviser cette pièce en plusieurs sous-ensembles et à fabriquer ces sous-ensembles de manière séparée. Ceci peut être réalisé en fabriquant l'un ou plusieurs des sous-ensemble une position qui n'est pas leur position finale, par exemple sous forme de superposition des sous-ensembles dans le bac. Cette séparation peut alternativement être obtenue en fabriquant ces sous-ensembles de manière indépendante. Les sous-ensembles sont ensuite solidarisés par des moyens mécaniques (i.e. un ajout de pièce) ou des moyens de liaison physico-chimique (i.e. application de colle). Un inconvénient majeur réside dans la différence de comportement mécanique de la pièce au niveau de la jonction entre les sous-ensembles, tant à cause de l'ajout de moyens extérieurs de solidarisation que par la discontinuité physique présente entre les sous-ensembles. Une difficulté supplémentaire réside dans la bonne cohésion des sous-ensembles entre eux ainsi que leur alignement. La perception et le confort d'un utilisateur reposant sur cette pièce peuvent ainsi être très altérés par cette jonction.

Il existe donc un besoin pour un élément de matelassure monolithique architecturée en treillis surmontant ces inconvénients

### Résumé de l'invention

L'invention concerne un élément de matelassure monolithique architecturé en treillis comprenant :
- un treillis de corps comportant une pluralité de motifs élémentaires de corps répétés périodiquement et en contact les uns avec les autres,
- un treillis superficiel recouvrant au moins partiellement le treillis de corps de manière à former une face externe de l'élément de matelassure, ledit treillis superficiel étant au contact et formé intégralement avec ledit treillis de corps, le treillis superficiel comportant une pluralité de motifs élémentaires superficiels répétés périodiquement, dans lequel l'élément de matelassure comprend un premier et un deuxième sous-éléments de matelassure définissant respectivement un premier et un deuxième treillis de corps ainsi qu'un premier et un deuxième treillis superficiels, les premier et deuxième sous-éléments de matelassure étant reliés entre eux au niveau d'une charnière reliant les premier et deuxième treillis superficiels, ladite charnière définissant un axe longitudinal de charnière et un axe de hauteur de charnière suivant lequel les treillis de corps et superficiel se superposent, ladite charnière permettant un mouvement de rotation dudit premier sous-élément de matelassure par rapport au deuxième sous-élément de matelassure autour de l'axe longitudinal de charnière entre une position dépliée et une position repliée.

L'adjonction d'une charnière entre les premier et deuxième treillis superficiels permet de conserver un lien solidaire entre eux lors de la fabrication de l'élément de matelassure. La réalisation de cette charnière de manière monolithique avec les treillis de corps et superficiel permet de garantir une continuité mécanique et visuelle de la surface de l'élément de matelassure. De plus, la charnière permet de garantir l'alignement des deux sous-éléments lors de la mise en position dépliée de l'élément de matelassure.

La charnière est venue de matière avec les premier et deuxième treillis superficiels. Autrement dit, la charnière est formée intégralement avec les premier et deuxième treillis superficiels.

Les axes longitudinal et de hauteur de charnière sont orthogonaux entre eux. La charnière définit également un axe transversal de charnière orthogonal à chacun des axes longitudinal et de hauteur de charnière.

Les treillis de corps et superficiel se superposent suivant l'axe de hauteur de charnière lorsque l'élément de matelassure est dans la position dépliée.

Selon un mode de réalisation de l'élément de matelassure, les premier et deuxième treillis de corps sont dépourvus de contact entre eux lorsque l'élément de matelassure est dans la position repliée.

Selon un mode de réalisation de l'élément de matelassure, les motifs élémentaires superficiels forment ensemble une peau, chaque motif élémentaire superficiel formant une portion de peau.

De préférence, chaque portion de peau présente des côtés compris entre 5 mm et 50 mm.

De préférence, chaque portion de peau est carrée.

Avantageusement, la peau augmente la surface de contact de la structure architecturée en treillis. La peau empêche également le contact entre l'utilisateur en appui avec la structure architecturée en treillis et le treillis de corps. La peau peut améliorer en outre l'aspect esthétique de la structure architecturée en treillis. Notamment, la peau peut comprendre une marque visuelle, par exemple une impression, une empreinte et/ou une texture.

Selon un mode de réalisation de l'élément de matelassure, les premier et deuxième treillis superficiels définissent une épaisseur de peau lorsque l'élément de matelassure est observé dans un plan perpendiculaire à l'axe longitudinal de charnière, ladite charnière présentant une épaisseur de charnière le long de l'axe de hauteur de charnière égale ou inférieure à cette épaisseur de peau lorsque l'élément de matelassure est dans la position dépliée.

Selon un mode de réalisation de l'élément de matelassure, les premier et deuxième treillis superficiels définissent ensemble une surface enveloppe supérieure et une surface enveloppe inférieure entre lesquelles l'ensemble des motifs élémentaires superficiels sont inscrits lorsque l'élément de matelassure est dans la position dépliée, ladite charnière s'étendant entre ces surfaces enveloppes supérieure et inférieure.

La charnière ne fait donc pas saillie hors du treillis superficiel le long de l'axe de hauteur de charnière. La charnière s'étend également de préférence dans la continuité de la surface périphérique formée par le treillis superficiel. Ainsi, la charnière ne forme pas un relief le long de cette surface périphérique, i.e. ni un creux ni une boursouflure. L'utilisateur a donc une perception très limitée de la présence ou de la localisation de la charnière en touchant l'élément de matelassure. La charnière ne forme donc pas une singularité à la surface de l'élément de matelassure.

Selon un mode de réalisation de l'élément de matelassure, chaque motif élémentaire superficiel des premier et deuxième sous-éléments de matelassure est relié de manière solidaire aux motifs élémentaires superficiels qui lui sont adjacents par au moins une jonction élémentaire de connexion.

Selon un mode de réalisation de l'élément de matelassure, la charnière comprend une pluralité de jonctions élémentaires de charnière, chaque motif élémentaire superficiel du premier sous-élément de matelassure étant relié à au moins un motif élémentaire superficiel du deuxième sous-élément de matelassure par au moins une jonction élémentaire de charnière.

Selon un mode de réalisation de l'élément de matelassure, chaque jonction élémentaire de charnière est un élément allongé reliant localement un bord d'un motif élémentaire superficiel du premier sous-élément de matelassure à un bord d'un autre motif élémentaire superficiel du deuxième sous-élément de matelassure.

La jonction élémentaire de charnière permet d'améliorer la résistance à l'arrachement de la charnière. Le risque de rupture de la charnière, notamment pendant une phase de dépoudrage de l'élément de matelassure, est réduit.

Selon un mode de réalisation de l'élément de matelassure, chaque motif élémentaire superficiel du premier sous-élément de matelassure est relié à un motif élémentaire superficiel du deuxième sous-élément de matelassure lui faisant face par au moins une jonction élémentaire de charnière et au moins une jonction élémentaire de connexion.

Selon un mode de réalisation de l'élément de matelassure, la charnière comprend uniquement une pluralité de jonctions élémentaires de connexion. Dans ce cas, la connexion de chacun des motifs élémentaires superficiels, y compris ceux disposés de part et d'autre de l'axe longitudinal de charnière et connectant la charnière aux premier et deuxième sous-éléments de matelassure, est identique pour l'ensemble du treillis superficiel. La continuité visuelle du treillis superficiel notamment au niveau de la charnière, est ainsi améliorée. La charnière devient très difficilement visible par un utilisateur.

Selon un mode de réalisation de l'élément de matelassure, chaque motif élémentaire superficiel du premier sous-élément de matelassure est relié à un motif élémentaire superficiel du deuxième sous-élément de matelassure lui faisant face par deux jonctions élémentaires de connexion, chacune disposé à une extrémité du motif élémentaire superficiel, une jonction élémentaire de charnière disposée entre les deux jonctions élémentaires de connexion.

Selon un mode de réalisation de l'élément de matelassure, chaque motif élémentaire de corps comprend au moins une face latérale destinée à être au contact d'une face latérale d'un motif élémentaire de corps adjacent au niveau de zones de contact, chacune de ces zones de contact d'une même face latérale s'étendant dans un même plan de contact.

Les faces latérales de chaque motif élémentaire de corps définissent un voxel dans lequel est le motif élémentaire de corps est inscrit.

Selon un mode de réalisation de l'élément de matelassure, les motifs élémentaires de corps présentent une forme et des dimensions identiques.

Ainsi les dimensions des voxels sont de préférence de forme et de dimensions identiques. De manière alternative, les voxels peuvent présenter des dimensions et/ou des formes différentes.

Selon un mode de réalisation de l'élément de matelassure, les premier et deuxième treillis de corps comprennent en outre une pluralité de motifs partiels de corps chacun solidaire d'au moins un motif élémentaire de corps, chaque motif partiel de corps formant une portion d'un motif élémentaire de corps.

Selon un mode de réalisation de l'élément de matelassure, les premier et deuxième treillis de corps présentent respectivement une première et une deuxième faces de contact séparées l'une de l'autre lorsque l'élément de matelassure est dans la position repliée et destinées à être disposées l'une contre l'autre lorsque l'élément de matelassure est disposée dans la position dépliée.

Selon un mode de réalisation de l'élément de matelassure, la charnière définit un plan médian de liaison incluant l'axe longitudinal de charnière, les première et deuxième faces de contact étant confondues avec le plan médian de liaison lorsque l'élément de matelassure est dans la position dépliée.

Selon un mode de réalisation de l'élément de matelassure, les première et deuxième faces de contact étant formées par des faces latérales de motifs élémentaires de corps.

Selon un mode de réalisation de l'élément de matelassure, les premier et deuxième treillis de corps présentent respectivement au moins un premier et au moins un deuxième reliefs de liaison s'étendant respectivement à partir des premier et deuxième faces de contact et étant configurés pour coopérer ensemble lorsque l'élément de matelassure est dans la position dépliée de manière à imbriquer les premier et deuxième treillis de corps.

Les premier et deuxième reliefs de liaison permettent une imbrication des premier et deuxième treillis de corps de manière à former une meilleure continuité du comportement mécanique de l'élément de matelassure au niveau de la charnière. Ainsi, l'utilisateur ne perçoit pas de discontinuité au toucher ou en exerçant une effort de compression le long de l'axe de hauteur de charnière à proximité de la charnière.

Selon un mode de réalisation de l'élément de matelassure, chaque premier relief de liaison coopère avec un deuxième relief de liaison lui faisant face lorsque l'élément de matelassure est dans la position dépliée, formant ainsi un couple de liaison.

Selon un mode de réalisation de l'élément de matelassure, les premier et deuxième reliefs de liaison d'un couple de liaison présentent une forme complémentaire l'un par rapport à l'autre.

Selon un mode de réalisation de l'élément de matelassure, les premier et deuxième reliefs de liaison s'étendant le long de l'axe longitudinal de charnière, de préférence sur une distance égale ou supérieure à 10% de la distance totale de la charnière le long de l'axe longitudinal de charnière.

Les premier 44 et deuxième 46 reliefs de liaison s'étendent par exemple sur une distance égale ou supérieure à 30%, 40%, 50% ou 60% de la distance totale de la charnière 36 le long de l'axe longitudinal de charnière A.

Selon un mode de réalisation de l'élément de matelassure, au moins l'un parmi les premier ou deuxième reliefs de liaison est formé par au moins un motif élémentaire de corps faisant saillie hors de la première ou de la deuxième faces de contact.

Selon un mode de réalisation de l'élément de matelassure, chacun des premier et deuxième treillis de corps comprend au moins trois couches superposées de motifs élémentaires de corps dont une couche supérieure, une couche inférieure et au moins une couche intermédiaire entre les couches inférieure et supérieure, les premier et deuxième reliefs de liaison étant formés au niveau de ladite au moins une couche intermédiaire.

Selon un mode de réalisation de l'élément de matelassure, celui-ci comprend au moins 2,5, de préférence au moins 3, motifs élémentaires de corps se superposant le long de l'axe de hauteur de charnière lorsque l'élément de matelassure est en position dépliée. Lesdits au moins 2,5 ou 3 motifs élémentaires de corps sont disposés le long de l'axe longitudinal de charnière et forment partiellement la première ou la deuxième face de contact.

Selon un mode de réalisation de l'élément de matelassure, celui-ci comprend en outre un treillis intermédiaire disposé entre et solidaire du treillis superficiel et du treillis de corps, ledit treillis intermédiaire présentant un comportement en compression dans une direction perpendiculaire au treillis superficiel différent de celui du treillis de corps.

Selon un mode de réalisation de l'élément de matelassure, les premier et deuxième treillis superficiels définissent entre eux un angle pliage, ledit angle de pliage présentant une valeur de 0° lorsque l'élément de matelassure est dans la position dépliée. L'angle de pliage est d'une valeur supérieure ou égale 10° dans la position repliée, de préférence supérieure ou égale à 45°, voire supérieure ou égale à 90°. L'angle de pliage est par exemple d'une valeur entre 90° et 180° lorsque l'élément de matelassure est dans la position repliée.

Selon un mode de réalisation de l'élément de matelassure, la structure en treillis est obtenue par fabrication additive.

Selon un mode de réalisation de l'élément de matelassure, les premier et deuxième treillis superficiels définissent une surface périphérique de l'élément de matelassure, la charnière définissant une dimension transversale de charnière le long de l'axe transversal de charnière entre les premier et de deuxième treillis superficiels, cette surface périphérique présentant une variation de distance le long de l'axe longitudinal de charnière par rapport à un plan périphérique perpendiculaire à l'axe de hauteur de charnière inférieure ou égal à 50% de la dimension transversale de charnière.

De préférence, l'élément de matelassure est réalisé en un matériau polymère ou en un métal ou en composite, par exemple en un thermoplastique, de préférence en un thermoplastique élastomère, ou en un polymère chargé de micro-billes de verre. De manière encore préférée, l'élément de matelassure est réalisé en polyuréthane thermoplastique (TPU).

De préférence, chaque motif élémentaire de corps comporte des brins de corps reliés entre eux pour former les arêtes d'un polyèdre et des brins de liaison reliant le polyèdre aux sommets de la cellule élémentaire de corps. La cellule élémentaire de corps est le plus petit parallélépipède rectangle circonscrit au motif élémentaire de corps.

De préférence, chaque motif élémentaire superficiel comporte un bloc d'appui s'étendant dans un plan médian, parallèle à la face de la structure définie par le treillis superficiel, et des pieds déformables chacun comportant une extrémité fixée au bloc d'appui et une autre extrémité fixée à un des brins de liaison et distante du plan médian.

Le treillis superficiel est configuré pour que sous l'effet d'un effort de compression normal à un plan médian de l'élément de matelassure, les pieds se déforment pour déplacer le bloc d'appui en translation selon un axe parallèle à l'effort de compression.

Une « cellule élémentaire » est le plus petit parallélépipède rectangle circonscrit à un motif élémentaire. La cellule élémentaire est une construction géométrique fictive, c'est-à-dire qu'elle n'est pas constituée de matière contrairement aux brins ou aux poutres.

Avantageusement, le treillis superficiel augmente la surface de contact de la structure architecturée en treillis sans influencer de manière conséquente les propriétés mécaniques en compression de cette dernière qui sont majoritairement déterminées par le treillis de corps. La surface de contact est formée par le bloc d'appui et peut ainsi être exempte de pointe. Il en résulte que, la contrainte au contact est moindre lors d'un appui corporel, et la pièce est donc plus confortable pour l'utilisateur.

En outre, lors d'un effort en compression appliqué sur le treillis superficiel, celui-ci transmet de manière homogène et uniformément réparti cet effort au treillis de corps. Il en découle une bonne répartition des contraintes dans l'ensemble de la structure architecturée en treillis et donc un meilleur confort pour l'utilisateur.

De préférence, les motifs élémentaires superficiels sont en contact les uns avec les autres.

De préférence, les pieds sont déformables au moins élastiquement.

Selon un autre aspect, l'invention concerne aussi un procédé de fabrication d'un élément de matelassure tel que décrit ci-dessus, comprenant les étapes suivantes :
- fabriquer au moyen d'une technique de fabrication additive ledit élément de matelassure dans une position repliée,
- positionner ledit élément de matelassure dans la position dépliée au moyen d'une rotation du premier sous-élément de matelassure par rapport au deuxième sous-élément de matelassure autour de l'axe longitudinal de charnière.

Selon un mode de réalisation de l'élément de matelassure, celui-ci peut comprendre au moins une charnière. L'élément de matelassure peut ainsi comprendre une pluralité de charnières permettant la réalisation d'un élément de matelassure de grande dimension. Les axes longitudinaux de charnière des différentes charnières peuvent être parallèle entre eux ou bien décalés angulairement les uns par rapport aux autres, notamment d'un angle différent de 180°.

Selon un mode de réalisation de l'élément de matelassure, la première et/ou la deuxième face de contact comprend au moins un motif élémentaire de renfort pour rigidifier la portion d'interface entre les premier et deuxième sous-éléments de matelassure. Ce motif élémentaire de renfort est configuré pour augmenter la surface de contact entre les premières et deuxième faces de contact. Pour cela, le motif élémentaire de renfort est de préférence un élément surfacique s'étendant le long de la première ou de la deuxième face de contact. La surface de renfort formée par chaque motif élémentaire de renfort est destinée à venir au contact d'un motif élémentaire de corps, d'un premier ou d'un deuxième relief de liaison ou d'un autre motif élémentaire de renfort.

Chaque motif élémentaire de renfort peut être disposé au niveau d'au moins une face d'un premier et/ou d'un deuxième reliefs de liaison.

De préférence, chaque face du premier treillis de corps libre de contact avec le deuxième treillis de corps et destinée à être au contact de ce même deuxième treillis de corps lorsque l'élément de matelassure est dans la position dépliée est munie d'un ou plusieurs motifs élémentaires de renfort.

Le motif élémentaire de renfort est de préférence un élément surfacique allongé s'étendant au niveau de la face latérale d'un motif élémentaire de corps ou d'une face d'un premier et/ou d'un deuxième reliefs de liaison.

Le motif élémentaire de renfort peut être de toute forme, de préférence reliant des sommets ou extrémités de brins de liaison d'une face latérale d'un motif élémentaire de corps. Le motif élémentaire de renfort est par exemple de la forme d'une ou plusieurs croix reliant les sommets des brins de liaison des motifs élémentaires de corps.

Selon un autre aspect de l'invention, une matelassure d'assise pour un siège comprend un élément de matelassure tel que décrit ci-dessus, ladite matelassure d'assise définissant un axe d'assise destiné à être orienté le long d'un axe antéro-postérieur d'un utilisateur assis sur ladite matelassure d'assise, ladite matelassure d'assise comprenant :
- une portion arrière destinée à être au contact d'un fessier d'un utilisateur et formant le première sous-élément de matelassure, et
- une portion frontale de support de jambes destinée à être au contact des cuisses de cet utilisateur et formant le deuxième sous-élément de matelassure,
dans laquelle l'axe longitudinal de charnière s'étend transversalement à l'axe d'assise de manière à s'étendre entre le fessier et les jambes d'un utilisateur assis sur ladite matelassure d'assise.

Selon un mode de réalisation de l'élément de matelassure, la portion frontale présente une forme en U définissant un évidement central.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[Fig.1] La [Fig.1] représente une vue en perspective d'un exemple d'élément de matelassure architecturé en treillis comprenant une charnière solidarisant des premier et deuxième sous-ensembles de matelassure, dans une position dépliée;
[Fig.2] La [Fig.2] représente une vue de côté de l'élément de matelassure de la [Fig.1] dans un plan perpendiculaire à un axe longitudinal de la charnière, dans une position repliée ;
[Fig.3] La [Fig.3] représente une vue de côté d'une structure architecturée en treillis selon l'invention comprenant un treillis superficiel et un treillis de corps ;
[Fig.4] La [Fig.4] représente une vue en perspective de la structure architecturée en treillis de la [Fig.3] ;
[Fig.5] La [Fig.5] représente une vue en perspective d'un motif élémentaire de corps du treillis de corps de la [Fig.3] ;
[Fig.6] La [Fig.6] représente une vue de côté d'un autre mode de réalisation d'un charnière comprenant un relief de liaison imbriquant des premier et deuxième treillis de corps lorsque l'élément de matelassure est dans la position dépliée ;
[Fig.7] La [Fig.7] représente une vue de côté de la [Fig.6] avec l'élément de matelassure disposé dans la position repliée ou partiellement repliée ;
[Fig.8] La [Fig.8]; représente une vue de côté d'un autre mode de réalisation dans lequel l'élément de matelassure comprend une pluralité de motifs élémentaires de renfort au niveau de première et deuxième faces de contact ;
[Fig.9] La [Fig.9] représente une vue de détail en perspective d'un motif élémentaire de renfort en forme de croix ;
[Fig. 10] La [Fig. 10] représente une vue en perspective d'un élément de matelassure en position repliée avec une pluralité de motifs élémentaires de renfort disposés sur des premier et deuxième reliefs ainsi que sur des première et deuxième faces de contact,
[Fig. 11] La [Fig.11] représente une vue en perspective d'une matelassure d'assise comprenant un élément de matelassure relié par une charnière.

### Description de mode(s) de réalisation

Par souci de clarté, les mêmes références désignant les mêmes éléments selon l'état de l'art et selon l'invention sont utilisées pour toutes les figures.

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

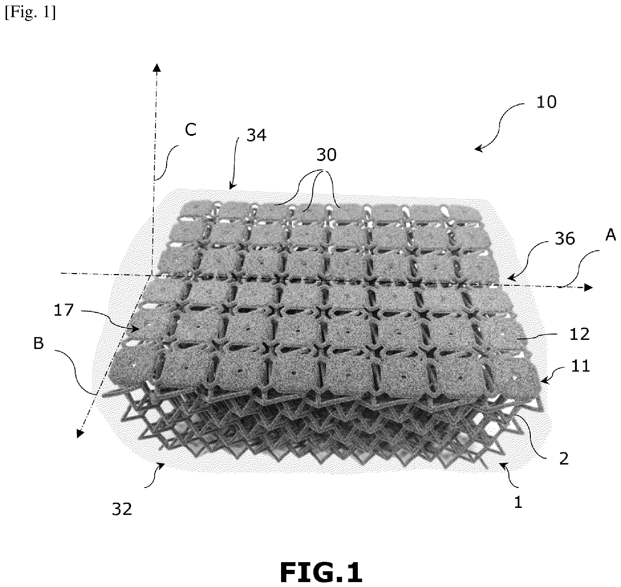

En référence à la [Fig.1], un élément de matelassure 10 monolithique architecturé en treillis comprend un treillis de corps 1 et un treillis superficiel 11.

Le treillis de corps 1 comprend une pluralité de motifs élémentaires de corps 2 répétés périodiquement et en contact les uns avec les autres.

Le treillis superficiel 11 recouvre au moins partiellement le treillis de corps 1 de manière à former une face externe de l'élément de matelassure 10. Le treillis superficiel 11 est au contact et formé intégralement avec le treillis de corps 1. Le treillis superficiel comporte une pluralité de motifs élémentaires superficiels 12 répétés périodiquement.

Les motifs élémentaires superficiels 12 forment ensemble une peau 17. En particulier, chaque motif élémentaire superficiel 12 forme une portion de peau 30.

L'élément de matelassure 10 comprend un premier 32 et un deuxième 34 sous-éléments.

La portion du treillis de corps 1 appartenant au premier sous-élément de matelassure 32 est appelée premier treillis de corps. La portion du treillis superficiel 11 appartenant au premier sous-élément de matelassure 32 est appelée premier treillis superficiel.

De manière similaire, la portion du treillis de corps 1 appartenant au deuxième sous-élément de matelassure 34 est appelée deuxième treillis de corps. La portion du treillis superficiel 11 appartenant au deuxième sous-élément de matelassure 34 est appelée deuxième treillis superficiel.

Les premier 32 et deuxième 34 sous-éléments de matelassure sont reliés entre eux au niveau d'une charnière 36 reliant les premier et deuxième treillis superficiels.

La charnière 36 définit un axe longitudinal de charnière A, un axe transversal de charnière B et un axe de hauteur de charnière C.

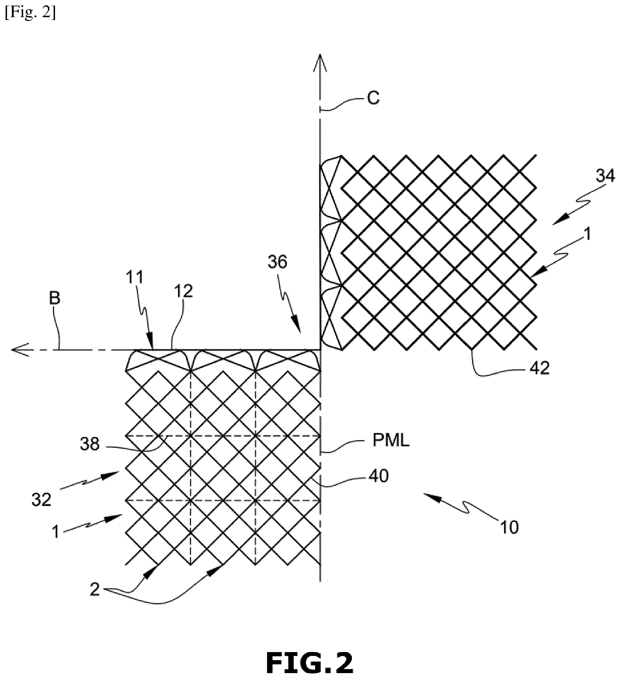

La charnière 36 permet un mouvement de rotation dudit premier sous-élément de matelassure 32 par rapport au deuxième sous-élément de matelassure 34 autour de l'axe longitudinal de charnière A entre une position dépliée, visible sur la [Fig.1], et une position repliée, visible sur la [Fig.2].

La position dépliée se caractérise pour le fait les premier et deuxième treillis de corps sont en contact les uns avec les autres au niveau d'au moins l'un parmi les motifs élémentaires de corps 2. De manière préférée, chacun des motifs élémentaires de corps 2 du premier treillis de corps est en contact avec au moins un motif élémentaire de corps 2 du deuxième treillis de corps.

La position dépliée peut également se caractériser par un angle de pliage défini entre les premier et deuxième treillis superficiels. Cet angle de pliage présente de préférence une valeur de 0° lorsque l'élément de matelassure est dans la position dépliée. Ainsi, le treillis superficiel 11 présente une face externe continue dans la position dépliée.

Cette position dépliée correspond à la position finale ou opérationnelle de l'élément de matelassure 10.

La position repliée correspond à une position de fabrication ou à une position intermédiaire de l'élément de matelassure 10. L'angle de pliage est d'une valeur supérieure ou égale 10° dans la position repliée, de préférence supérieure ou égale à 45°, voire supérieure ou égale à 90°. L'élément de matelassure 10 peut également être fabriqué avec les premier et deuxième treillis superficiels positionné l'un face à l'autre. Dans ce dernier cas, l'angle de pliage peut être égal à 180°.

Dans cette position repliée, les premier et deuxième treillis de corps sont dépourvus de contact entre eux.

L'élément de matelassure 10 comprend de préférence également un treillis d'appui 41 comportant une pluralité de motifs élémentaires d'appui répétés périodiquement et solidaires entre eux. Ce treillis d'appui 41 est disposé entre et solidaire du treillis de corps 1 et du treillis superficiel 11.

De manière alternative, l'élément de matelassure 10 peut être dépourvu de treillis d'appui 41. Dans ce cas, l'élément de matelassure 10 comprend de préférence un treillis superficiel 11 directement au contact du treillis de corps 1.

De préférence, le treillis d'appui 41 ou intermédiaire présente un comportement en compression dans une direction perpendiculaire au treillis superficiel 11 différent de celui du treillis de corps 1. L'élément de matelassure présente ainsi une stratification, chaque couche de cette stratification pouvant présenter une fonction ou un comportement mécanique différent. Le treillis d'appui 41 peut ainsi présenter une résistance à la compression moindre que le treillis de corps 1 pour augmenter le confort de l'utilisateur tout en garantissant une retenue ou une absorption satisfaisantes.

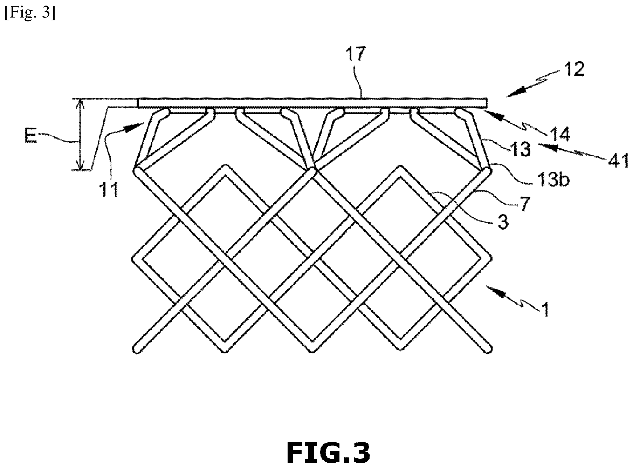

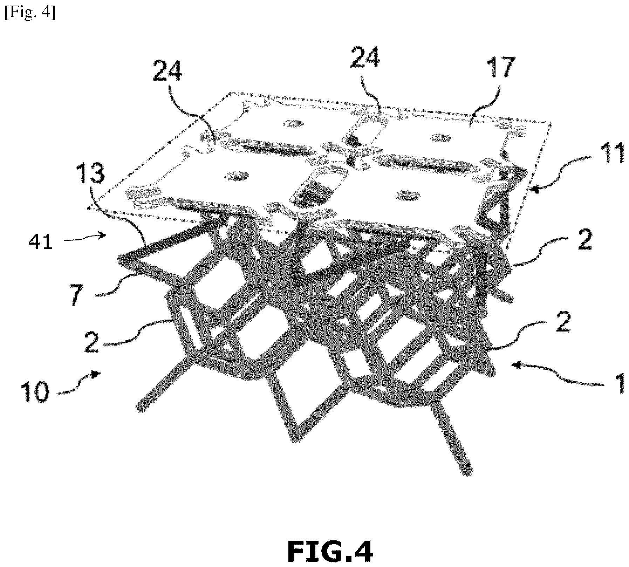

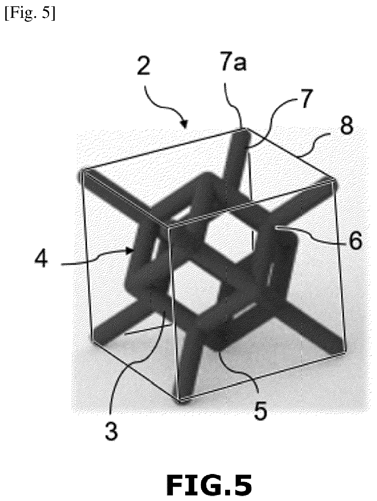

Un exemple d'architecture en treillis est illustré en référence aux figures 3 à 5. L'invention n'est pas limitée à cette architecture spécifique, notamment au niveau géométrique.

Le treillis de corps 1 est formé d'une pluralité de motifs élémentaires de corps 2 de type dodécaédrique rhombique répétés périodiquement et en contact les uns avec les autres. Le motif élémentaire de corps 2 comprend vingt-quatre brins 3 liés entre eux de sorte à former les arêtes d'un dodécaèdre rhombique 4. Le dodécaèdre rhombique 4 comprend six sommets à angles aigus 5 et huit sommets à angles obtus 6. Un sommet à angle aigu 5 est un sommet où quatre faces du dodécaèdre rhombique 4 se rencontrent sur leurs angles aigus. Un sommet à angle obtus 6 est un sommet où trois faces du dodécaèdre rhombique 4 se rencontrent sur leurs angles obtus. Le motif élémentaire 2 est inscrit dans une cellule élémentaire 8, qui correspond au parallélépipède rectangle circonscrit à chacun des sommets à angles aigus 5. Le motif élémentaire 2 comprend également huit brins de liaison 7, chacun reliant un des sommets à angles obtus 6 au sommet le plus proche de la cellule élémentaire 8. Les brins de liaison 7 s'étendent le long des diagonales de la cellule élémentaire 8.

Le motif élémentaire de type dodécaédrique rhombique 2 est similaire au motif dénommé « fluorite » dans le logiciel « nTopology 3.26.3 » développé et commercialisé par la société nTopology, INC. En effet, il est similaire à une structure cristalline de la fluorite pour laquelle chacun des sites atomiques auraient été reliés entre eux par des brins.

Les motifs élémentaires de type dodécaédrique rhombique 2 adjacents sont fixés entre eux par contact entre leurs brins de liaison 7 respectifs et par contact entre leurs sommets à angle aigu respectifs.

Le treillis d'appui 41 comprend quatre pieds 13 et un bloc d'appui 14.

Chacun des pieds 13 est constitué d'une unique branche comprenant une extrémité 13a fixée au bloc d'appui 14. L'unique branche du pied 13 comprend également une autre extrémité 13b, opposée à l'extrémité 13a et fixée à un des brins de liaison 7 du treillis de corps 1.

Les premier et deuxième treillis superficiels définissent une épaisseur de peau E lorsque l'élément de matelassure est 10 observé dans un plan perpendiculaire à l'axe longitudinal de charnière A. Cette épaisseur de peau E correspond à l'épaisseur de la peau 17. L'épaisseur de peau E est prise le long de l'axe de hauteur de charnière C lorsque l'élément de matelassure 10 est dans la position dépliée.

La charnière 36 présente une épaisseur de charnière le long de l'axe de hauteur de charnière égale ou inférieure à cette épaisseur de peau E lorsque l'élément de matelassure 10 est dans la position dépliée.

De préférence, les premier et deuxième treillis superficiels définissent ensemble une surface enveloppe supérieure et une surface enveloppe inférieure entre lesquelles l'ensemble des motifs élémentaires superficiels 12 sont inscrits lorsque l'élément de matelassure 10 est dans la position dépliée. La charnière s'étend ainsi de préférence entre ces surfaces enveloppes supérieure et inférieure. La charnière 36 s'étend ainsi dans la continuité du treillis superficiel 11.

Chaque motif élémentaire superficiel 12 des premier et deuxième sous-éléments de matelassure est relié de manière solidaire aux motifs élémentaires superficiels 12 qui lui sont adjacents par au moins une jonction élémentaire de connexion 24. En référence à la fifure 4, les jonctions élémentaires de connexion 24 sont de preference situées à proximité des sommets des motifs élémentaires superficiels 12.

Tel que visible sur la [Fig.1], la charnière 36 comprend une pluralité de jonctions élémentaires de charnière 25. Chaque motif élémentaire superficiel 12 du premier sous-élément de matelassure est relié à au moins un motif élémentaire superficiel 12 du deuxième sous-élément de matelassure par au moins une jonction élémentaire de charnière 25.

La charnière 36 comprend de préférence une pluralité de jonctions élémentaires de connexion 24 reliant chacun des motifs élémentaires superficiels 12 disposés de part et d'autre de la charnière 36. De préférence, les jonctions élémentaires de connexion 24 sont identiques au niveau de la charnière 36 et dans le reste du treillis superficiel 11. Autrement dit, les motifs élémentaires superficiels 12 sont joint de manière identique sur la totalité du treillis superficiel 11, y compris au niveau de la charnière 36.

La jonction élémentaire de charnière 25 est ainsi de préférence additionnelle aux jonctions élémentaires de connexion 24.

La jonction élémentaire de charnière 25 relie de préférence les zone centrales de chacun des bords des motifs élémentaires superficiels 12.

Chaque jonction élémentaire de charnière 25 est un élément allongé reliant localement un bord d'un motif élémentaire superficiel 12 du premier sous-élément de matelassure à un bord d'un autre motif élémentaire superficiel 12 du deuxième sous-élément de matelassure.

Chaque motif élémentaire superficiel 12 du premier sous-élément de matelassure est relié à un motif élémentaire superficiel 12 du deuxième sous-élément de matelassure lui faisant face par au moins une jonction élémentaire de charnière 25 et au moins une jonction élémentaire de connexion 24.

De préférence, chaque motif élémentaire superficiel 12 du premier sous-élément de matelassure est relié à un motif élémentaire superficiel du deuxième sous-élément de matelassure lui faisant face par deux jonctions élémentaires de connexion 24. Dans ce cas, chaque jonction élémentaire de connexion 24 est disposé à une extrémité du motif élémentaire superficiel 12, une jonction élémentaire de charnière 25 est disposée entre les deux jonctions élémentaires de connexion 24.

Tel que visible sur la [Fig.2], chaque motif élémentaire de corps 2 comprend au moins une face latérale 38 destinée à être au contact d'une face latérale 38 d'un motif élémentaire de corps 2 qui lui est adjacent. Ce contact est réalisé au niveau de zones de contact du motif élémentaire de corps 2. Ces zones de contact sont par exemple formées par les sommets des brins de liaison 7.

Chacune des zones de contact d'une même face latérale 38 s'étend de préférence dans un même plan de contact. Ainsi, les sommets des brins de liaison 7 s'étendent donc sur une même face latérale 38 au sein de ce plan de contact.

Tel que visible sur la [Fig.2], les premier et deuxième treillis de corps présentent respectivement une première 40 et une deuxième 42 faces de contact séparées l'une de l'autre lorsque l'élément de matelassure 10 est dans la position repliée et destinées à être disposées l'une contre l'autre lorsque l'élément de matelassure 10 est disposée dans la position dépliée.

La charnière 36 définit un plan médian de liaison PML incluant l'axe longitudinal de charnière A. Les première 40 et deuxième 42 faces de contact sont confondues avec le plan médian de liaison PML lorsque l'élément de matelassure 10 est dans la position dépliée.

Les première 40 et deuxième 42 faces de contact sont de préférence formées par des faces latérales 38 de motifs élémentaires de corps 2.

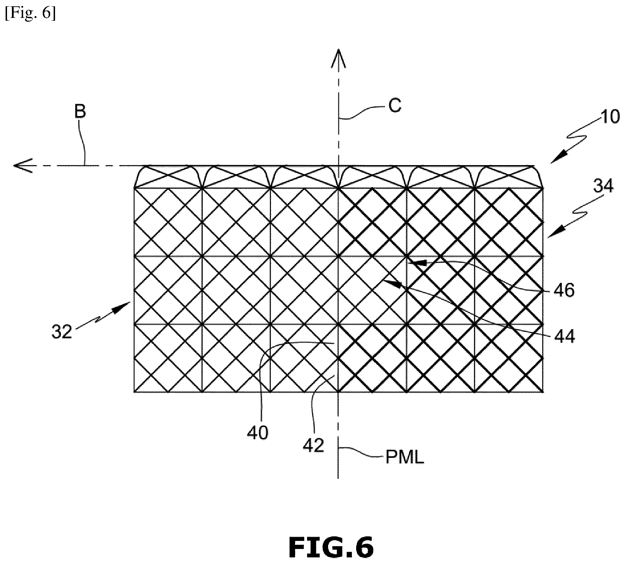

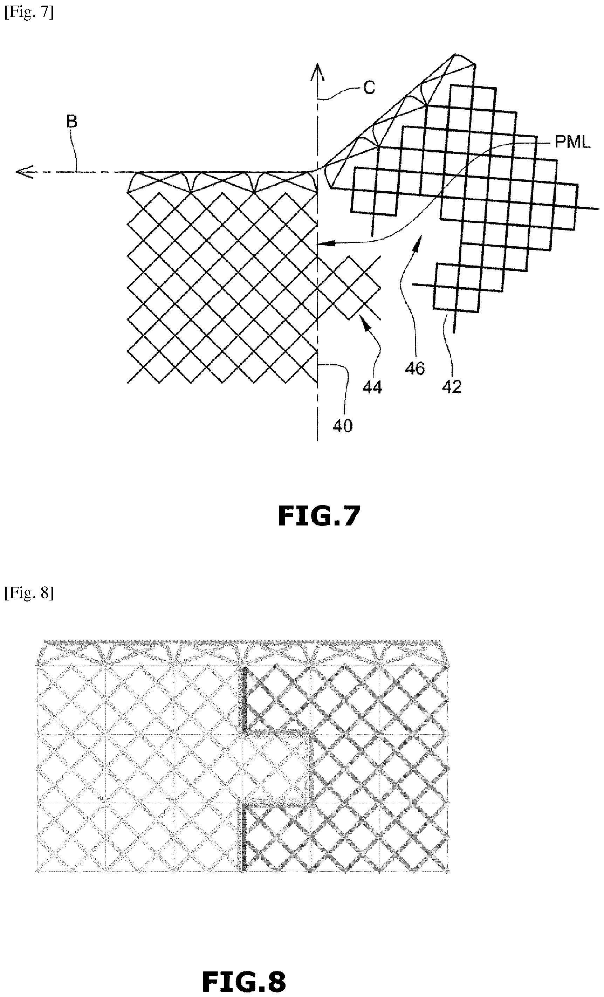

En référence avec les figures 6 et 7, les premier et deuxième treillis de corps présentent respectivement au moins un premier 44 et au moins un deuxième 46 reliefs de liaison s'étendant respectivement à partir des première 40 et deuxième 42 faces de contact.

Lesdits au moins un premier 44 et au moins un deuxième 46 reliefs de liaison sont configurés pour coopérer ensemble lorsque l'élément de matelassure 10 est dans la position dépliée de manière à imbriquer les premier et deuxième treillis de corps. L'un des reliefs de liaison s'insère donc à l'intérieur de l'autre des reliefs de liaison. Cette imbrication permet une meilleure répartition des efforts au sein du treillis de corps 1 lorsque l'élément de matelassure 10 est dans la position dépliée. Il y a ainsi une meilleure cohésion entre les premier et deuxième treillis de corps.

Chaque premier relief de liaison 44 coopère avec un deuxième relief de liaison 46 lui faisant face lorsque l'élément de matelassure 10 est dans la position dépliée, formant ainsi un couple de liaison.

De préférence, les premier 44 et deuxième 46 reliefs de liaison d'un couple de liaison présentent une forme complémentaire l'un par rapport à l'autre.

De manière préférée encore, au moins l'un parmi les premier 44 ou deuxième 46 reliefs de liaison est formé par au moins un motif élémentaire de corps 2. Ce motif élémentaire de corps 2 fait par exemple saillie hors de la première 40 ou de la deuxième 42 faces de contact.

Les premier 44 et deuxième 46 reliefs de liaison peuvent s'étendre le long de l'axe longitudinal de charnière A. Les premier 44 et deuxième 46 reliefs de liaison s'étendent de préférence sur une distance égale ou supérieure à 10% de la distance totale de la charnière 36 le long de l'axe longitudinal de charnière A. Les premier 44 et deuxième 46 reliefs de liaison s'étendent par exemple sur une distance égale ou supérieure à 30%, 40%, 50% ou 60% de la distance totale de la charnière 36 le long de l'axe longitudinal de charnière A.

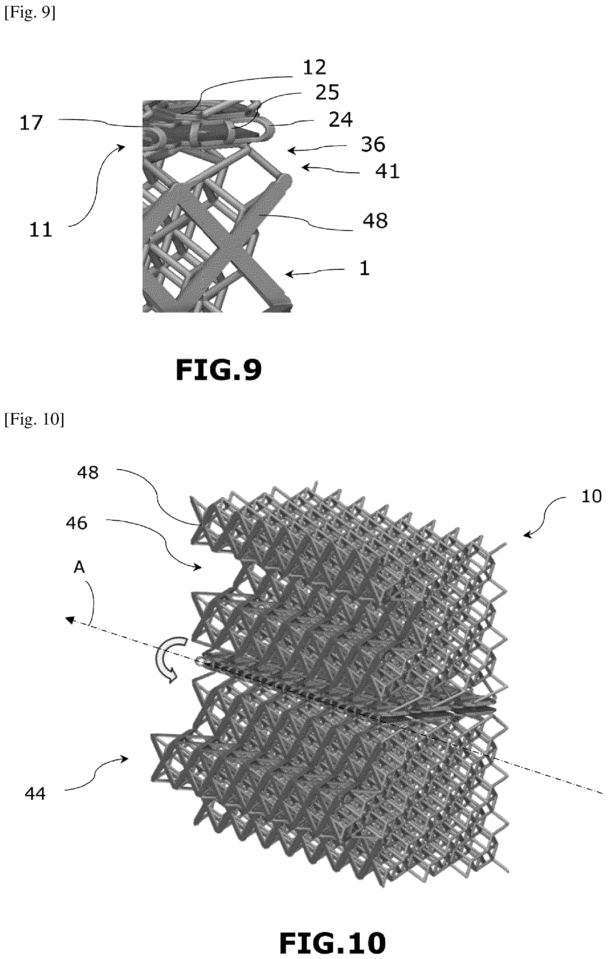

Selon un exemple illustré sur la [Fig.9], les premier 44 et deuxième 46 reliefs de liaison peuvent s'étendre sur la totalité de la distance totale de la charnière 36 le long de l'axe longitudinal de charnière A.

Selon un mode de réalisation préféré, chacun des premier et deuxième treillis de corps comprend au moins trois couches superposées de motifs élémentaires de corps 2 : une couche supérieure, une couche inférieure et au moins une couche intermédiaire disposée entre les couches inférieure et supérieure. Les premier 44 et deuxième 46 reliefs de liaison sont de préférence formés au niveau de ladite au moins une couche intermédiaire, tel que visibles sur les figures 6 et 7.

En référence aux figures 9 et 10, un motif élémentaire de renfort 48 peut être disposé au niveau d'au moins une face d'un premier 44 et/ou d'un deuxième 46 reliefs de liaison. Ce motif élémentaire de renfort 48 est configuré pour augmenter la surface de contact entre les premières 40 et deuxième 42 faces de contact.

De préférence, chaque face du premier treillis de corps libre de contact avec le deuxième treillis de corps et destinée à être au contact de ce même deuxième treillis de corps lorsque l'élément de matelassure 10 est dans la position dépliée est munie d'un ou plusieurs motif élémentaire de renfort 48.

Le motif élémentaire de renfort 48 est de préférence un élément surfacique allongé s'étendant au niveau de la face latérale 38 d'un motif élémentaire de corps 2 ou d'une face d'un premier 44 et/ou d'un deuxième 6 reliefs de liaison.

De manière préférée et illustrée en [Fig.9], le motif élémentaire de renfort 48 est de la forme d'une ou plusieurs croix reliant les sommets des brins de liaison 7 des motifs élémentaires de corps 2.

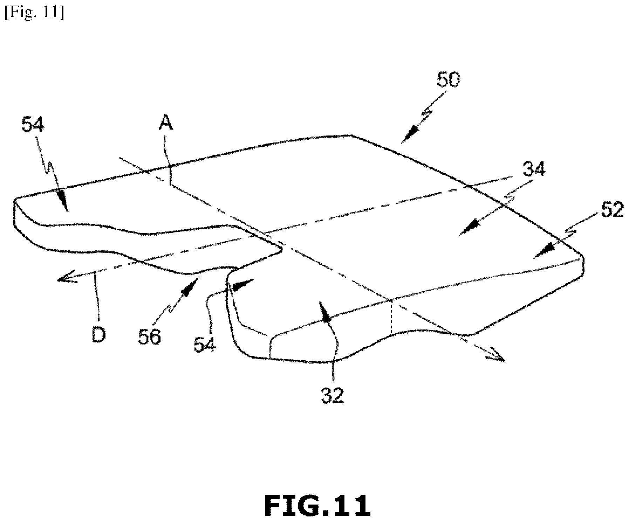

En référence à la [Fig.11], une matelassure d'assise 50 pour un siège comprend un élément de matelassure tel que décrit ci-avant.

La matelassure d'assise 50 définissant un axe d'assise D destiné à être orienté le long d'un axe antéro-postérieur d'un utilisateur assis sur ladite matelassure d'assise 50. La matelassure d'assise 50 comprend une portion arrière 52 destinée à être au contact d'un fessier d'un utilisateur et formant le deuxième sous-élément de matelassure 34.

La matelassure d'assise 50 comprend en outre une portion frontale 54 de support de jambes destinée à être au contact des cuisses de cet utilisateur et formant le premier sous-élément de matelassure 32.

L'axe longitudinal de charnière A est choisi pour s'étendre transversalement à l'axe d'assise D de manière à s'étendre entre le fessier et les jambes d'un utilisateur assis sur ladite matelassure d'assise 50.

La portion frontale 54 présente de préférence une forme en U définissant un évidement central 56.

## Revendications

1. Elément de matelassure (10) monolithique architecture en treillis comprenant :
- un treillis de corps (1) comportant une pluralité de motifs élémentaires de corps (2) répétés périodiquement et en contact les uns avec les autres,
- un treillis superficiel (11) recouvrant au moins partiellement le treillis de corps de manière à former une face externe de l'élément de matelassure (10), ledit treillis superficiel (11) étant au contact et formé intégralement avec ledit treillis de corps (1), le treillis superficiel (11) comportant une pluralité de motifs élémentaires superficiels (12) répétés périodiquement,
dans lequel l'élément de matelassure (10) comprend un premier (32) et un deuxième (34) sous-éléments de matelassure définissant respectivement un premier et un deuxième treillis de corps ainsi qu'un premier et un deuxième treillis superficiels, les premier (32) et deuxième (34) sous-éléments de matelassure étant reliés entre eux au niveau d'une charnière (36) reliant les premier et deuxième treillis superficiels, ladite charnière (36) définissant un axe longitudinal de charnière (A) et un axe de hauteur de charnière (C) suivant lequel les treillis de corps (1) et superficiel (11) se superposent, ladite charnière (36) permettant un mouvement de rotation dudit premier sous-élément de matelassure (32) par rapport au deuxième sous-élément de matelassure (34) autour de l'axe longitudinal de charnière (A) entre une position dépliée et une position repliée.

2. Elément de matelassure (10) selon la revendication 1, dans lequel les motifs élémentaires superficiels (12) forment ensemble une peau, chaque motif élémentaire superficiel (12) formant une portion de peau.

3. Elément de matelassure (10) selon la revendication 1 ou 2, dans lequel les premier et deuxième treillis superficiels définissent une épaisseur de peau (E) lorsque l'élément de matelassure (10) est observé dans un plan perpendiculaire à l'axe longitudinal de charnière (A), ladite charnière (36) présentant une épaisseur de charnière le long de l'axe de hauteur de charnière égale ou inférieure à cette épaisseur de peau (E) lorsque l'élément de matelassure (10) est dans la position dépliée.

4. Elément de matelassure (10) selon l'une quelconque des revendications 1 à 3, dans lequel les premier et deuxième treillis superficiels définissent ensemble une surface enveloppe supérieure et une surface enveloppe inférieure entre lesquelles l'ensemble des motifs élémentaires superficiels (12) sont inscrits lorsque l'élément de matelassure (10) est dans la position dépliée, ladite charnière (36) s'étendant entre ces surfaces enveloppes supérieure et inférieure.

5. Elément de matelassure (10) selon l'une quelconque des revendications précédentes, dans lequel chaque motif élémentaire superficiel (12) des premier (32) et deuxième (34) sous-éléments de matelassure est relié de manière solidaire aux motifs élémentaires superficiels (12) qui lui sont adjacents par au moins une jonction élémentaire de connexion (24).

6. Elément de matelassure (10) selon l'une quelconque des revendications précédentes, dans lequel la charnière (36) comprend une pluralité de jonctions élémentaires de charnière (25), chaque motif élémentaire superficiel (12) du premier sous-élément de matelassure (32) étant relié à au moins un motif élémentaire superficiel (12) du deuxième sous-élément de matelassure (34) par au moins une jonction élémentaire de charnière (25).

7. Elément de matelassure (10) selon la revendication précédente, dans lequel chaque jonction élémentaire de charnière (25) est un élément allongé reliant localement un bord d'un motif élémentaire superficiel (12) du premier sous-élément de matelassure (32) à un bord d'un autre motif élémentaire superficiel (12) du deuxième sous-élément de matelassure (34).

8. Elément de matelassure (10) selon la revendication 6 ou 7 en combinaison avec la revendication 5, dans lequel chaque motif élémentaire superficiel (12) du premier sous-élément de matelassure (32) est relié à un motif élémentaire superficiel (12) du deuxième sous-élément de matelassure (34) lui faisant face par au moins une jonction élémentaire de charnière (25) et au moins une jonction élémentaire de connexion (24).

9. Elément de matelassure (10) selon la revendication précédente, dans lequel chaque motif élémentaire superficiel (12) du premier sous-élément de matelassure (32) est relié à un motif élémentaire superficiel (12) du deuxième sous-élément de matelassure (34) lui faisant face par deux jonctions élémentaires de connexion (24), chacune disposé à une extrémité du motif élémentaire superficiel (12), une jonction élémentaire de charnière (25) disposée entre les deux jonctions élémentaires de connexion (24).

10. Elément de matelassure (10) selon l'une quelconque des revendications précédentes, dans lequel chaque motif élémentaire de corps (2) comprend au moins une face latérale (38) destinée à être au contact d'une face latérale (38) d'un motif élémentaire de corps (2) adjacent au niveau de zones de contact, chacune de ces zones de contact d'une même face latérale s'étendant dans un même plan de contact.

11. Elément de matelassure (10) selon l'une quelconque des revendications précédentes, dans lequel les premier et deuxième treillis de corps présentent respectivement une première (40) et une deuxième (42) faces de contact séparées l'une de l'autre lorsque l'élément de matelassure (10) est dans la position repliée et destinées à être disposées l'une contre l'autre lorsque l'élément de matelassure (10) est disposée dans la position dépliée.

12. Elément de matelassure (10) selon la revendication précédente, dans lequel la charnière (36) définit un plan médian de liaison (PML) incluant l'axe longitudinal de charnière (A), les première (40) et deuxième (42) faces de contact étant confondues avec le plan médian de liaison (PML) lorsque l'élément de matelassure (10) est dans la position dépliée.

13. Elément de matelassure (10) selon la revendication 11 ou 12, dans lequel les premier et deuxième treillis de corps présentent respectivement au moins un premier (44) et au moins un deuxième (46) reliefs de liaison s'étendant respectivement à partir des premier (40) et deuxième (42) faces de contact et étant configurés pour coopérer ensemble lorsque l'élément de matelassure (10) est dans la position dépliée de manière à imbriquer les premier et deuxième treillis de corps.

14. Elément de matelassure (10) selon la revendication précédente, dans lequel au moins l'un parmi les premier (44) ou deuxième (46) reliefs de liaison est formé par au moins un motif élémentaire de corps (2) faisant saillie hors de la première ou de la deuxième faces de contact.

15. Matelassure d'assise (50) pour un siège comprenant un élément de matelassure (10) selon l'une des revendications précédentes, ladite matelassure d'assise définissant un axe d'assise D destiné à être orienté le long d'un axe antéro-postérieur d'un utilisateur assis sur ladite matelassure d'assise, ladite matelassure d'assise comprenant :
- une portion arrière (52) destinée à être au contact d'un fessier d'un utilisateur et formant le première sous-élément de matelassure, et
- une portion frontale (54) de support de jambes destinée à être au contact des cuisses de cet utilisateur et formant le deuxième sous-élément de matelassure,
dans laquelle l'axe longitudinal de charnière (A) s'étend transversalement à l'axe d'assise (D) de manière à s'étendre entre le fessier et les jambes d'un utilisateur assis sur ladite matelassure d'assise.
